(19) Europäisches Patentamt
European Patent Office
Office européen des brevets

(11) **EP 3 364 169 B1**

(12) # EUROPÄISCHE PATENTSCHRIFT

(45) Veröffentlichungstag und Bekanntmachung des Hinweises auf die Patenterteilung:
**15.05.2019 Patentblatt 2019/20**

(51) Int Cl.:
*G01N 21/3504* (2014.01)　　*G01J 3/42* (2006.01)
*G01N 21/27* (2006.01)　　*G01N 21/39* (2006.01)
*G01N 21/85* (2006.01)

(21) Anmeldenummer: **17156753.0**

(22) Anmeldetag: **17.02.2017**

(54) **PROZESS-GASANALYSATOR**

PROCESS GAS ANALYSER

ANALYSEUR DE GAZ DE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.08.2018 Patentblatt 2018/34**

(73) Patentinhaber: **Siemens Aktiengesellschaft**
**80333 München (DE)**

(72) Erfinder:
• **Bitter, Ralf**
**76139 Karlsruhe (DE)**
• **Depenheuer, Daniel**
**67365 Schwegenheim (DE)**
• **Gaiser, Franz**
**77704 Oberkirch (DE)**

• **Kluczynski, Pawel**
**61-612 Poznan (PL)**

(56) Entgegenhaltungen:
**WO-A1-87/02460　　DE-B3-102013 218 771**
**JP-A- 2014 102 140　　US-A- 5 026 991**
**US-A1- 2007 296 976　　US-A1- 2013 287 061**
**US-B1- 7 705 313**

• **LOU X ET AL: "Temperature-Corrected Oxygen Detection Based on Multi-Mode Diode Laser Correlation Spectroscopy", JOURNAL OF SPECTROSCOPY, Bd. 32, Nr. 30, 2013, Seiten 6090-8, XP055152166, ISSN: 2314-4920, DOI: 10.1155/2013/524071**

**EP 3 364 169 B1**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Prozess-Gasanalysator zur Analyse eines in einem Anlagenteil geführten Prozessgasgemischs,

- mit zwei unterschiedlichen, an diametral gegenüberliegenden Seiten des Anlagenteils montierbaren Messköpfen, die Fenster (10,11) umfassen und die Umgebungsluft enthalten,
- mit einer wellenlängendurchstimmbaren Laserdiode und einem Detektor, welche in den Messköpfen von dem Innern des Anlagenteils durch Fenster getrennt angeordnet sind, so dass das Licht der Laserdiode nach Durchstrahlen des Anlagenteils auf den Detektor fällt,
- mit einer Steuereinrichtung, die dazu ausgebildet ist, die Laserdiode mit einer periodischen Strom-Zeit-Funktion anzusteuern, so dass bei der Detektion des Lichts ein zeitaufgelöstes Absorptionsspektrum des Prozessgasgemischs erhalten wird, und
- mit einer Auswerteeinrichtung, die dazu ausgebildet ist, anhand einer ausgewählten Absorptionslinie einer interessierenden Gaskomponente in dem detektierten Absorptionsspektrum des Prozessgasgemischs die Konzentration dieser Gaskomponente in dem Prozessgasgemisch zu bestimmen.

Ein solcher Prozess-Gasanalysator ist aus der EP 1 693 665 A1 oder EP 3 104 163 A1 bekannt.

In der Laserabsorptionsspektroskopie wird ein Messgasgemisch mit dem Licht einer wellenlängendurchstimmbaren Laserdiode durchstrahlt und die Konzentration einer interessierenden Gaskomponente des Messgasgemischs anhand der durch die Absorption des Lichts an der Stelle einer ausgewählten Absorptionslinie der Gaskomponente hervorgerufenen Minderung der Lichtintensität bestimmt. Dabei wird die Laserdiode periodisch mit einer dreieck- oder sägezahnförmigen Strom-Zeit-Funktion (Stromrampe) angesteuert, um die Absorptionslinie der Gaskomponente wellenlängenabhängig abzutasten. Zur Erhöhung der Messgenauigkeit kann die Strom-Zeit-Funktion mit einem sinusförmigen Signal vorgegebener Frequenz f und Amplitude moduliert und das Licht bei einer höheren Harmonischen der Frequenz, üblicherweise der doppelten Frequenz 2f, phasensensitiv detektiert und ausgewertet werden (sog. Wellenlängenmodulationsspektroskopie oder WMS). Der 2f-Signalanteil in dem detektierten Licht bzw. dem erhaltenen Detektorsignal ist von dem Modulationsverhältnis, d. h. von dem Verhältnis der Modulationsamplitude zur Breite der abgetasteten Absorptionslinie, abhängig. Bei kleiner Modulationsamplitude ist der 2f-Signalanteil direkt proportional zu der zweiten Ableitung des Detektorsignals. Die Auswertung kann z. B. durch Anfitten (Curve-Fitting) des im Idealfall zu erwartenden Verlaufs oder Profils des demodulierten Detektorsignals an dessen tatsächlichen Verlauf erfolgen. Aus dem dabei erhaltenen Messergebnis wird schließlich die Konzentration der zu messenden Gaskomponente bestimmt.

Bei in-situ Prozess-Gasanalysatoren, wie sie aus der oben genannten EP 1 693 665 A1 oder EP 3 104 163 A1 bekannt sind, sind die Laserdiode und der Detektor üblicherweise in unterschiedlichen Messköpfen untergebracht, die an Prozessflanschen auf einander diametral gegenüberliegenden Seiten eines das zu messende Prozessgasgemisch enthaltenden oder führenden Anlagenteils (z. B. Abgasleitung, Behälter, Kamin) montiert sind. Damit die Laserdiode und der Detektor nicht in Kontakt mit dem oft aggressiven, heißen und staubhaltigen Prozessgasgemisch kommen, sind sie hinter Fenstern angeordnet. Wie die EP 1 693 665 A1 offenbart, können die Innenräume der Messköpfe mit einem Spülgas wie z. B. trockenem Stickstoff gespült werden, um das Eindringen von Umgebungsluft und so die Beeinträchtigung der Messung, insbesondere von Spurengasen, durch Gaskomponenten der Umgebungsluft, beispielsweise Wasserdampf, zu verhindern. Dies führt zu zusätzlichen Kosten weil das vergleichsweise teure Spülgas zum einen bereitgestellt werden muss und zum anderen während des Messbetriebs verbraucht wird.

Aus der US 5,705,816 A oder der US 6,483,589 B1 ist es bekannt, den Einfluss von Umgebungs-Wasserdampf auf die Messung der Konzentration von Wassermolekülen oder Wasserdampfspuren in einem in einer Messzelle enthaltenen Messgasgemisch zu kompensieren, indem ein Teil des von der Laserdiode kommenden Lichts mittels eines Strahlteilers aus dem Lichtweg zu der Messzelle ausgekoppelt und mit einem zusätzlichen Referenzdetektor detektiert wird. Das Referenzsignal des Referenzdetektors wird von dem Messsignal des hinter der Messzelle liegenden Detektors unmittelbar (US 5,705,816 A) oder im Falle eines nach dem WMS-Prinzip arbeitenden Spektrometers nach 2f-Demodulation beider Signale (US 6,483,589 B1) subtrahiert. Die zusätzlichen optischen Oberflächen des Strahlteilers und des Referenzdetektors können jedoch zu unerwünschten optischen Interferenzen führen, die die Messung stören.

Aus der US 7,705,313 B1 ist es bekannt, einen Teil des die Messzelle mit dem Messgasgemisch verlassenden Lichts aus dem Weg zu dem Detektor auf einen zweiten Hilfsdetektor abzuzweigen. Aufgrund der unterschiedlichen Weglängen zwischen der Messzelle und den beiden Detektoren ist die Lichtabsorption durch Umgebungsluft unterschiedlich groß, so dass mit dem Signal des Hilfsdetektors der Einfluss der Umgebungsluft auf das Signal des Detektors kompensiert werden kann.

Aus der DE 10 2013 218 771 B3 ist es bekannt, bei einem nach dem WMS-Prinzip arbeitenden Spektrometer die Modulation in aufeinanderfolgenden Abtastintervallen mit unterschiedlichen Modulationsamplituden vorzunehmen, im Rahmen einer Kalibrierung bei unterschiedlichen bekannten Konzentrationen der zu messenden Gaskomponente für die unterschiedlichen Modulationsamplituden erhaltene Messergebnisse und ihre Änderungen bei unterschiedlichen Betriebstemperaturen oder Verläufen der Betriebstemperatur des Gasanalysators abzuspeichern und beim Messen einer unbekannten Konzentration der Gaskomponente durch Vergleich der in aufeinanderfolgenden Abtastintervallen bei unterschiedlichen Modulationsamplituden erhaltenen Messergebnisse mit den abgespeicherten Messergebnissen die zu messende Konzentration zu ermitteln.

Aus der US 2007/296976 A1 ist ein FTIR-Spektrometer bekannt, dessen Lichtstrahl nicht nur das zu messende Abgas in einem Stahlkonverter sondern gleichzeitig auch die heiße und schmutzige Umgebungsluft außerhalb des Konverters durchläuft. Ein der Berechnung der Abgaszusammensetzung zugrunde liegendes mathematische Modell wird an die heiße und schmutzige Umgebungsluft und an die speziellen Temperaturen und Abgaszusammensetzungen des Konverters angepasst und entsprechend neu erarbeitet, wobei im Rahmen von Kalibrierungen Referenzspektren erzeugt werden.

Aus der WO 87/02460 A1 ist ein Infrarot-Gasanalysator bekannt, bei dem die Umgebungstemperatur und/oder den Sauerstoff in der Umgebungsluft außerhalb der das Messgasgemisch enthaltenden Messküvette gemessenen wird. Bei einer vorgegebenen Änderung der Umgebungstemperatur wird eine automatische Nullung auslöst.

Bei der Messung des Sauerstoffgehalts in einem Prozessgasgemisch stellt der vorhandene Luftsauerstoff im optischen Strahlengang innerhalb der beiden Messköpfe eine Herausforderung dar.

Der Erfindung liegt die Aufgabe zugrunde, den Einfluss von Luftsauerstoff in den Messköpfen auf die Messung des Sauerstoffgehalts in dem Prozessgasgemisch zu kompensieren, ohne dass die Messköpfe mit einem sauerstofffreien Gas gespült oder zusätzliche optische Komponenten im Lichtweg von der Laserdiode zu dem Detektor vorgesehen werden müssen.

Gemäß der Erfindung wird die Aufgabe dadurch gelöst, - dass bei dem Prozess-Gasanalysator der eingangs angegebenen Art in wenigstens einem der beiden Messköpfe ein Temperatursensor angeordnet ist, der dazu ausgebildet ist, die jeweils aktuelle Temperatur bei der Messung des Absorptionsspektrums zu erfassen,

- dass in einem Speicher der Auswerteeinrichtung bei unterschiedlichen und mit dem Temperatursensor gemessenen Temperaturen und ohne Prozessgasgemisch aufgenommene Umgebungs-Referenzspektren der in den beiden Messköpfen enthaltenen Umgebungsluft abgespeichert sind, und
- dass die Auswerteeinrichtung ferner dazu ausgebildet ist, eines der abgespeicherten Umgebungs-Referenzspektren in Abhängigkeit von der mit dem Temperatursensor erfassten aktuellen Temperatur auszuwählen oder aus zwei abgespeicherten Umgebungs-Referenzspektren zu berechnen, es von dem aktuell detektierten Absorptionsspektrum des Prozessgasgemischs zu subtrahieren und anschließend anhand einer ausgewählten Sauerstoff-Absorptionslinie die Sauerstoffkonzentration in dem Prozessgasgemisch zu bestimmen.

Da der Sauerstoffgehalt der Atmosphäre (rund 20,9 % Vol.) bekannt ist und nur minimalen Schwankungen unterliegt, kann die durch den Sauerstoff der Umgebungsluft in den Messköpfen erfolgende wellenlängenabhängige Lichtabsorption vor der Analyse des Prozessgasgemischs bei Abwesenheit des Prozessgasgemischs oder jedes sonstigen sauerstoffhaltigen Gasgemischs zwischen den Messköpfen ermittelt und später bei der Analyse des Prozessgasgemischs von dem dann gemessenen Absorptionsspektrum subtrahiert werden. Die ausschließlich in den Messköpfen stattfindende wellenlängenabhängige Lichtabsorption, also das Umgebungs-Referenzspektrum, kann beispielsweise bei der Herstellung der Messköpfe oder vor ihrer Montage an dem das Prozessgasgemisch führenden Anlagenteil ermittelt werden, wobei beide Messköpfe an ihren Fenstern unmittelbar, d. h. ohne Zwischenraum, aneinanderliegen oder voneinander beabstandet gegenüberliegen, wobei der Zwischenraum mit einem sauerstofffreien Gas, z. B. Stickstoff gefüllt ist. Damit die Ermittlung des Umgebungs-Referenzspektrums unter gleichen optischen Bedingungen wie beim Einsatz des Gasanalysators in der Prozessanlage erfolgt, kann der Zwischenraum so gewählt werden, das er dem Innenquerschnitt des Anlagenteils entspricht, an dem die Messköpfe montiert werden. Es ist auch möglich das Umgebungs-Referenzspektrum zu ermitteln, wenn die Messköpfe bereits an dem Anlagenteil montiert sind und die Anlage nicht in Betrieb ist. In diesem Fall müsste das Anlagenteil für die Aufnahme des Umgebungs-Referenzspektrums einmalig mit einem geeigneten sauerstofffreien Gas gespült werden.

Das Absorptionsspektrum eines Gases bzw. die für die Analyse ausgewählte Absorptionslinie sind temperatur- und druckabhängig, wobei jedoch der Einfluss von Luftdruckänderungen an ein und demselben Messort vernachlässigbar ist. Es werden daher, z. B. in einer Klimakammer, Umgebungs-Referenzspektren bei unterschiedlichen Temperaturen aufgenommen und zusammen mit diesen bzw. diesen zuordenbar abgespeichert. Im späteren Messbetrieb wird dann anhand der aktuell gemessen Temperatur das zugehörige Umgebungs-Referenzspektrum ausgewählt oder im Falle von Zwischentemperaturwerten aus zwei abgespeicherten Umgebungs-Referenzspektren z. B. durch Mittelung oder Interpolation berechnet und von dem aktuell detektierten Absorptionsspektrum des Prozessgasgemischs subtrahiert.

Da in den beiden Messköpfen aufgrund ihrer unterschiedlichen Montagepositionen unterschiedliche Temperaturen herrschen können, wenn z. B. einer der Messköpfe im Sonnenlicht und der andere im Schatten liegt, kann in vorteilhafter Weise in beiden Messköpfen jeweils ein Temperatursensor angeordnet sein. Die Umgebungs-Referenzspektren werden dann bei unterschiedlichen Kombinationen der Temperaturen in den Messköpfen aufgenommen und abgespeichert und im späteren Messbetrieb anhand der in beiden Messköpfen aktuell gemessenen Temperaturen ausgewählt oder, wie oben erläutert, berechnet und von dem aktuell detektierten Absorptionsspektrum des Prozessgasgemischs subtrahiert.

Zur Verringerung des Aufwandes bei der Aufnahme der Umgebungs-Referenzspektren, können diese alternativ in Abhängigkeit von der in nur einem Messkopf gemessenen Temperatur ermittelt und abgespeichert werden, wobei im späteren Messbetrieb das in Abhängigkeit von der in diesem einen Messkopf erfassten aktuellen Temperatur ausgewählte oder berechnete Umgebungs-Referenzspektrum in Abhängigkeit von der Differenz der in beiden Messköpfen erfassten aktuellen Temperaturen mit einem empirisch ermittelten Faktor korrigiert wird, bevor es von dem aktuell detektierten Absorptionsspektrum des Prozessgasgemischs subtrahiert wird. Dies ist insbesondere dann möglich, wenn der Temperaturunterschied in den beiden Messköpfen eher gering ist und z. B. auf wenige 10 Grad Kelvin begrenzt ist.

Wie bereits erwähnt, ist der Einfluss von Luftdruckschwankungen auf die Messung vernachlässigbar. Im Unterschied dazu ist der Luftdruck in stärkerem Maße von der Höhe des Messortes über dem Meeresspiegel abhängig. Aus diesem Grund können die Umgebungs-Referenzspektren zusätzlich bei unterschiedlichen Umgebungsdrücken aufgenommen und zusammen mit diesen bzw. diesen zuordenbar abgespeichert werden. Dazu können die Messköpfe aktiv mit Umgebungsluft bei einstellbarem Spüldruck gespült werden. Im späteren Messbetrieb wird das von dem aktuell detektierten Absorptionsspektrum des Prozessgasgemischs zu subtrahierende Umgebungs-Referenzspektrum zusätzlich in Abhängigkeit von dem aktuell gemessenen Umgebungsdruck ausgewählt bzw. berechnet.

Im einfachsten Fall können die unmittelbar von dem Detektor erhaltenen, ggf. anschließend noch verstärkten oder gefilterten, Umgebungs-Referenzspektren abgespeichert und im Messbetrieb von dem entsprechend erhaltenen Absorptionsspektrum subtrahiert werden. Im Falle eines nach dem WMS-Prinzip arbeitenden Prozess-Gasanalysators, bei dem die Strom-Zeit-Funktion zur Ansteuerung Laserdiode mit einem sinusförmigen Signal vorgegebener Frequenz und Modulationsamplitude moduliert und das detektierte Licht bei der vorgegebenen Frequenz oder einer ihrer höheren Harmonischen zu demoduliert wird, sind es vorzugsweise die demodulierten bzw. nach der Demodulation erhaltenen Umgebungs-Referenzspektren, welche abgespeichert werden und von den im Messbetrieb erhaltenen demodulierten Absorptionsspektren subtrahiert werden.

Die von den im Messbetrieb erhaltenen Absorptionsspektren zu subtrahierenden Umgebungs-Referenzspektren können anhand vergleichsweise weniger gemessener Umgebungs-Referenzspektren berechnet oder simuliert werden. Wie oben bereits erwähnt, kann bei der Wellenlängenmodulationsspektroskopie das demodulierte Detektorsignal durch Anfitten eines parametrisch beschreibbaren Profils einer demodulierten idealen Absorptionslinie ausgewertet werden, wobei einer der veränderbaren Parameter die Konzentration der interessierenden Gaskomponente ist. Entsprechend kann ein solches Profil auch an die Sauerstoff-Absorptionslinie in den gemessenen Umgebungs-Referenzspektren angefittet werden. Dabei kann die Erfassung des Umgebungs-Referenzspektrums bei unterschiedlichen Temperaturen und Drücken auf vergleichsweise wenige Messungen und Stützpunkte beschränkt werden, um anhand der durch das Fitting erhaltenen Profile die Profile der demodulierten Sauerstoff-Absorptionslinie der in den beiden Messköpfen enthaltenen Umgebungsluft für praktisch beliebige Temperaturen und Drücke zu berechnen. Im Messbetrieb wird dann in Abhängigkeit von der aktuell gemessenen Temperatur und ggf. dem gemessenen Druck das Profil der demodulierten Sauerstoff-Absorptionslinie der Umgebungsluft berechnet oder aus vorberechneten Profilen ausgewählt und von dem demodulierten Absorptionsspektrum subtrahiert.

Ein Problem besteht in einer möglichen Alterung der Laserdiode in dem Zeitraum zwischen der Aufnahme und Abspeicherung der Umgebungs-Referenzspektren und einer später erfolgenden Messung des Prozessgasgemischs, was zur Folge hat, dass die optische Leistung abnimmt und sich die Wellenlänge des erzeugten Lichts und damit das Abstimmverhalten der Laserdiode über die Strom-Zeit-Funktion verändert. Das kann dazu führen, dass das bei der Messung erhaltene Absorptionsspektrum in Bezug auf seine Breite nicht mehr dem von ihm zu subtrahierenden Umgebungs-Referenzspektrum entspricht, so dass die auf die Subtraktion folgende weitere Auswertung fehlerbehaftet ist.

Wie z. B. aus der EP 1 544 604 A1 oder aus P. Kluczynski et al.: "Wavelength modulation absorption spectrometry - an extensive scrutiny of the generation of signals" in Spectrochimica Acta Part B 56, August 2001, Seiten 1277-1354, bekannt ist, kann das Profil einer bei der N-ten Harmonischen der Modulationsfrequenz f demodulierten Absorptionslinie analytisch beschrieben werden, wobei die Beschreibung neben Parametern, die die Temperatur- und Druckabhängigkeit der Absorptionslinie beschreiben, auch modulationsspezifische Parameter enthält, die sich mit Alterung der Laserdiode ändern können. Dazu gehören die Zentralwellenlänge bzw. die dazu inverse optische Frequenz zur Abtastung der Absorptionslinie, die Modulationsamplitude der Wellenlänge bzw. der dazu inversen optischen Frequenz und ein oder mehrere Modulationskoeffizienten, welche das lineare und ggf. nichtlineare Verhältnis zwischen der Modulationsamplitude der Lichtintensität und der Modulationsamplitude der Wellenlänge bzw. optischen Frequenz angeben.

Beim Anfitten des Profils der demodulierten idealen Absorptionslinie an die interessierende Sauerstoff-Absorptionslinie in dem aufgenommenen demodulierten Umgebungs-Referenzspektrum erhält man für die modulationsspezifischen Parameter Werte, die von dem Zustand der Laserdiode zum Zeitpunkt der Aufnahme des Umgebungs-Referenzspektrums abhängig sind. Wenn man später zum Zeitpunkt der aktuellen Messung das Profil der demodulierten idealen Absorptionslinie an eine von der interessierenden Sauerstoff-Absorptionslinie verschiedene Absorptionslinie, z. B. einer anderen Gaskomponente des Prozessgasgemischs, in dem detektierten und demodulierten Absorptionsspektrum anfittet, erhält man für die modulationsspezifischen Parameter neue Werte, die von dem Zustand der Laserdiode zum Zeitpunkt der aktuellen Messung abhängig sind. Mit diesen neuen Werten kann nun das in Abhängigkeit von der aktuellen Temperatur und ggf. dem aktuellen Druck ausgewählte und von dem demodulierten aktuellen Absorptionsspektrum zu subtrahierende Profil der demodulierten Sauerstoff-Absorptionslinie der Umgebungsluft so korrigiert werden, als ob es mit der Laserdiode in dem jetzigen aktuellen Alterungszustand aufgenommen worden wäre.

Zur weiteren Erläuterung der Erfindung wird im Folgenden auf die Figuren der Zeichnung Bezug genommen; im Einzelnen zeigen:

Figur 1    ein Beispiel für einen in-situ Prozess-Gasanalysator,

Figur 2    ein Ausführungsbeispiel des erfindungsgemäßen Prozess-Gasanalysators,

Figur 3    ein Beispiel für die Subtraktion eines Umgebungs-Referenzspektrums von dem aktuellen Absorptionsspektrum und

Figur 4    ein Beispiel für den Fehler, der entsteht, wenn das aktuelle Absorptionsspektrum und das von ihm zu subtrahierende Umgebungs-Referenzspektrum bei unterschiedlichen Alterungszuständen der Laserdiode aufgenommen worden sind.

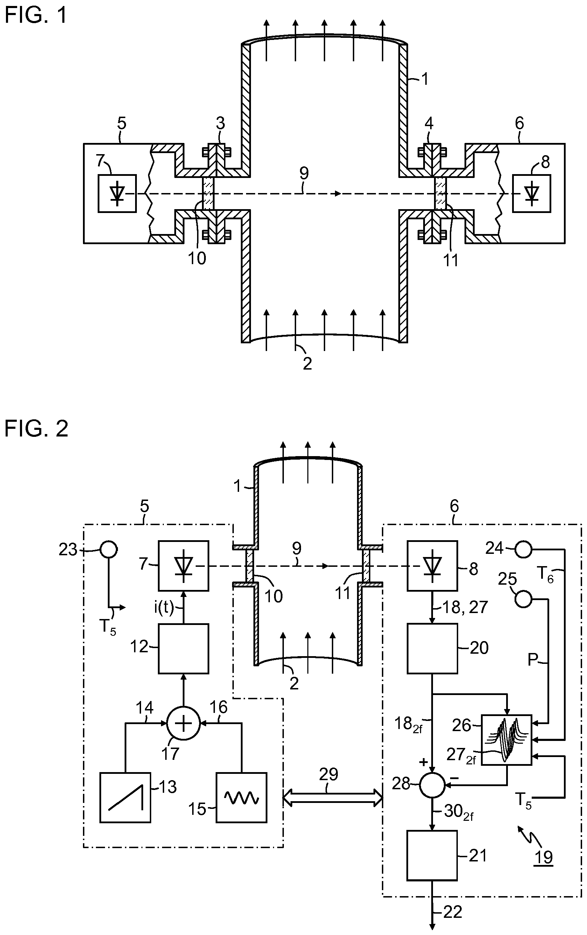

Figur 1 zeigt in schematischer Darstellung ein Anlagenteil 1, z. B. einen Abgaskanal, durch den ein zu analysierendes Prozessgasgemisch 2 strömt. Das Anlagenteil 1 weist an zwei diametral gegenüberliegenden Stellen Prozessflansche 3, 4 auf, an denen zwei Messköpfe 5, 6 eines Prozess-Gasanalysators montiert sind. Beide Messköpfe 5, 6 enthalten jeweils ein optoelektronisches Element 7, 8, das in dem einen Fall eine Laserdiode 7 und in dem anderen Fall ein Detektor 8 ist. Das von der Laserdiode 7 erzeugte Licht 9 wird durch das Anlagenteil 1 mit dem darin geführten Prozessgasgemisch 2 geleitet und trifft anschließend auf den Detektor 8. Die optoelektronischen Elemente 7, 8 sind durch Fenster 10, 11 von dem Inneren des Anlagenteils 1 und damit von dem Prozessgasgemisch 2 getrennt

Figur 2 zeigt beispielhaft ein Blockschaltbild des erfindungsgemäßen Prozess-Gasanalysators. Die Laserdiode 7 wird von einer steuerbaren Stromquelle 12 mit einem Injektionsstrom i(t) angesteuert, wobei die Intensität und Wellenlänge des erzeugten Lichts 9 von dem Strom i(t) und der Betriebstemperatur der Laserdiode 7 abhängen. Die Stromquelle 12 wird von einem ersten Signalgenerator 13 periodisch mit einem vorgegebenen, vorzugsweise rampen- oder dreieckförmigen Signal 14 angesteuert, um die Laserdiode 7 mit einer gleichartigen Strom-Zeit-Funktion i(t) anzusteuern und mit dem entsprechend modulierten Licht 9 eine ausgewählte Absorptionslinie einer interessierenden Gaskomponente, hier Sauerstoff, in dem Prozessgasgemisch 2 wellenlängenabhängig abzutasten. Ein zweiter Signalgenerator 15 erzeugt ein sinusförmiges Signal 16 der Frequenz f, mit dem in einem Summierglied 17 das rampen- oder dreieckförmigen Signal 14 moduliert wird.

Beim Durchstrahlen des Anlagenteils 1 wird ein geringer Teil des von der Laserdiode 7 erzeugten Lichts 9 von den verschiedenen Gaskomponenten des Prozessgasgemischs 2 wellenlängenabhängig absorbiert. Der Detektor 8 erzeugt in Abhängigkeit von der detektierten Lichtintensität ein Detektorsignal 18, das als Information ein zeitaufgelöstes Absorptionsspektrum des Prozessgasgemischs 2 einschließlich einer ausgewählten Sauerstoff-Absorptionslinie enthält, anhand derer in einer Auswerteeinrichtung 19 die Sauerstoffkonzentration in dem Prozessgasgemisch 2 bestimmt wird. Dazu wird das ggf. verstärkte und gefilterte Detektorsignal bzw. Absorptionsspektrum 18 zunächst in einem Demodulator 20 bei der n-ten, hier z. B. der zweiten Harmonischen 2f der Modulationsfrequenz f demoduliert. Eine Recheneinrichtung 21 verarbeitet das erhaltene demodulierte Absorptionsspektrum $18_{2f}$ an der Stelle der ausgewählten Sauerstoff-Absorptionslinie zu einem Messwert 22 für den Sauerstoffgehalt des Prozessgasgemischs 2 weiter.

In jedem der beiden Messköpfe 5, 6 ist jeweils ein Temperatursensor 23 bzw. 24 zur Messung Temperatur $T_5$ bzw. $T_6$ in dem betreffenden Messkopf angeordnet. Optional kann in einem der beiden Messköpfe, hier dem Messkopf 6, ein Drucksensor 25 zur Messung des Luftdrucks angeordnet sein.

Die Messung des Sauerstoffgehalts in dem Prozessgasgemisch 2 ist von dem Luftsauerstoff überlagert, der sich im optischen Strahlengang innerhalb der beiden Messköpfe 5, 6, also zwischen der Laserdiode 7 und dem Fenster 10 und zwischen dem Fenster 11 und dem Detektor 8 befindet. Um den Einfluss des Luftsauerstoffs auf die Messung des Sauerstoffgehalts in dem Prozessgasgemisch 2 zu kompensieren, sind in einem Speicher 26 Umgebungs-Referenzspektren $27_{2f}$ der in den beiden Messköpfen 5, 6 enthaltenen Umgebungsluft abgespeichert, die einmalig und ohne Anwesenheit des Prozessgasgemischs 2 bei unterschiedlichen Temperaturen $T_5$, $T_6$ und ggf. unterschiedlichen Drücken P aufgenommen worden sind. Im späteren Messbetrieb wird dann anhand der aktuell gemessen Temperaturen $T_5$, $T_6$ und ggf. des Druckes P das zugehörige abgespeicherte Umgebungs-Referenzspektrum ausgewählt oder im Falle von Zwischentemperatur- und/oder -druckwerten durch Mittelung oder Interpolation aus zwei abgespeicherten Umgebungs-Referenzspektren berechnet und in einem Subtrahierer 28 von dem aktuell detektierten Absorptionsspektrum $18_{2f}$ des Prozessgasgemischs 2 subtrahiert, bevor in der Recheneinrichtung 21 die Konzentration des Sauerstoffs in dem Prozessgasgemisch 2 ermittelt wird. Da die Subtraktion hinter dem Demodulator 20 erfolgt, handelt es sich bei den abgespeicherten Umgebungs-Referenzspektren 27 um die demodulierten Umgebungs-Referenzspektren $27_{2f}$. Alternativ kann die Subtraktion auch vor der Demodulation stattfinden.

Eine Kommunikationsverbindung 29 ermöglicht neben der Übertragung von Steuer- und Synchronisierungssignalen zwischen beiden Messköpfen 5, 6 auch z. B. die Übertragung des Temperaturmesswerts $T_5$ aus dem Messkopf 5 in den Messkopf 6.

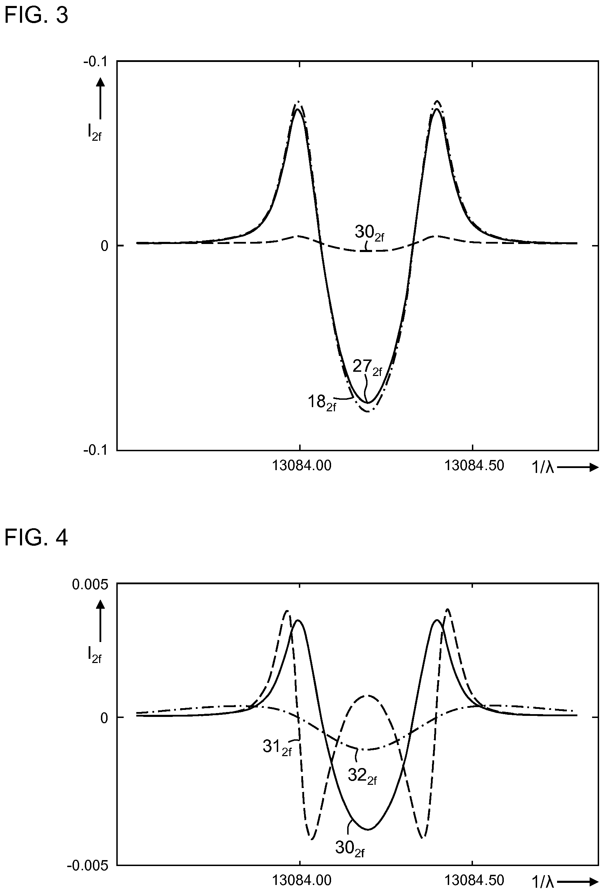

Fig. 3 zeigt ein Beispiel für das bei einer aktuellen Messung erhaltene und demodulierte Absorptionsspektrum $18_{2f}$ der ausgewählten Sauerstoff-Absorptionslinie, das davon zu subtrahierende 2f-Umgebungs-Referenzspektrum $27_{2f}$ des Luftsauerstoffs in den Messköpfen 5, 6 sowie das nach der Subtraktion erhaltene 2f-Differenzspektrum $30_{2f}$, welches der Absorption durch den Sauerstoff im Prozessgasgemisch 2 entspricht. $I_{2f}$ bezeichnet die Intensität und $1/\lambda$ die Wellenzahl. Bei dem gezeigten Beispiel liegt der Sauerstoffgehalt im Prozessgasgemisch 2 bei 1000 ppm, die optische Messstrecke in dem Anlagenteil 1 beträgt 2 m, die Absorptionsstrecken in den Messköpfen 5, 6 betragen in Summe 20 cm.

Bei dem zu subtrahierenden 2f-Umgebungs-Referenzspektrum $27_{2f}$ kann es sich auch um das Profil einer idealen demodulierten Absorptionslinie handeln, das durch unterschiedliche Parameter beschrieben wird und durch Variation der Parameter an das bei bestimmten Temperaturen $T_5$, $T_6$ und bei einem bestimmten Druck P durch Messung erhaltene demodulierte Umgebungs-Referenzspektrum angefittet worden ist. Aus solchen durch Fitting erhaltenen Profile können weitere Profile für andere Temperaturen und Drücke berechnet werden, ohne dass dazu Messungen der Umgebungs-Referenzspektren erforderlich sind.

Wie z. B. aus der oben erwähnten Publikation P. Kluczynski et al.: "Wavelength modulation absorption spectrometry - an extensive scrutiny of the generation of signals" bekannt ist, variieren aufgrund der sinusförmiger Modulation des Laserstroms i(t) mit der Frequenz f die optische Frequenz $v_L$ und die Intensität $I_L$ des erzeugten Lichts 9 mit:

$$v_L = v_c(t) + v_a \cos(2\pi f t)$$

und

$$I_L(v_c, v_a, t) = I_{L,0}(v_c) + \kappa_1 v_a \cos(2\pi f t + \Phi_1) + \kappa_2 v_a^2 \cos(2\pi 2 f t + \Phi_2) \quad .$$

Dabei bezeichnen $v_c$ die optische Mittenfrequenz, um die die Modulation erfolgt, $v_a$ die Modulationsamplitude der optischen Frequenz, $I_{L,0}$ die Intensität des erzeugten Lichts 9 bei der optischen Mittenfrequenz, $\kappa_1$, $\kappa_2$ einen linearen und nichtlinearen Modulationskoeffizienten, welche das lineare und quadratische Verhältnis zwischen der Modulationsamplitude der Lichtintensität $I_L$ und der Modulationsamplitude optischen Frequenz $v_a$ angeben, und $\Phi_2$, $\Phi_2$ einen Phasenwinkel zwischen der Modulation der Lichtintensität $I_L$ und der Modulation der optischen Frequenz $v_a$.

Nach Absorption des Lichts durch eine ideale Absorptionslinie mit Lorentz-Profil X erhält man aufgrund der 2f-Demodulation des detektierten Lichts für den geraden Fourier-Koeffizienten der zweiten Harmonischen der detektierten Lichtintensität $S_{AS}$:

$$S_{AS,2}^{even}(v) \approx -\eta T \cdot \left( \overline{\chi}_2^{even} \cdot I_{L,0}(v_c) + \frac{\overline{\chi}_1^{even} + \overline{\chi}_3^{even}}{2} \cdot \kappa_1 v_a \cos \Phi_1 + \overline{\chi}_0^{even} \cdot \kappa_2 v_a^2 \cos \Phi_2 + ... \right) \cdot \alpha_0 \quad .$$

Dabei bezeichnen $\eta$ einen Gerätefaktor, T die wellenlängenunabhängige optische Transmission, $X_n$ die n-ten Fourier-Koeffizienten des wellenlängenmodulierten Lorentz-Profils und $\alpha_0$ die Absorption bei der Mittenwellenlänge der Absorptionslinie.

Die Parameter $v_c$, $v_a$, $\kappa_1$, $\kappa_2$ können sich durch Alterung der Laserdiode 7 ändern, wobei die optische Mittenfrequenz $v_c$ in bekannter Weise durch Line-locking stabil gehalten werden kann.

Figur 4 zeigt ein Beispiel für den Fehler, der entsteht, wenn das aktuelle Absorptionsspektrum und das von ihm zu subtrahierende Umgebungs-Referenzspektrum bei unterschiedlichen Alterungszuständen der Laserdiode 7 aufgenommen worden sind. Mit $31_{2f}$ ist das nach der Subtraktion erhaltene fehlerhafte 2f-Signal bezeichnet, während $32_{2f}$ das Ergebnis des Versuchs eines Anfittens des Profils einer idealen demodulierten Absorptionslinie an das fehlerhafte 2f-Signal $31_{2f}$ ist. Zum Vergleich ist die demodulierte Absorptionsline $30_{2f}$ des Sauerstoffs (1000 ppm) im Prozessgasgemisch 2 gezeigt, die man ohne den Fehler nach der Subtraktion erhalten hätte.

Indem bei der aktuellen Messung das Profil, beispielsweise das Voigt-Profil oder das Lorentz-Profil X, einer demodulierten idealen Absorptionslinie an eine von der interessierenden Sauerstoff-Absorptionslinie verschiedene Absorptionslinie, z. B. einer anderen Gaskomponente des Prozessgasgemischs 2 oder einer in einem Referenzkanal gemessenen Gaskomponente, in dem detektierten und demodulierten Absorptionsspektrum angefittet wird, erhält man für die oben genannten modulationsspezifischen Parameter $v_a$, $\kappa_1$, $\kappa_2$ Werte, die von dem Zustand der Laserdiode 7 zum Zeitpunkt der aktuellen Messung abhängig sind. Diese Werte können nun auf das zur Subtraktion von dem demodulierten aktuellen Absorptionsspektrum $18_{2f}$ ausgewählte Profil $27_{2f}$ angewandt werden, um dieses entsprechend dem aktuellen Alterungszustand zu korrigieren.

**Patentansprüche**

1.   Prozess-Gasanalysator zur Analyse eines in einem Anlagenteil (1) geführten Prozessgasgemischs (2),

  - mit zwei unterschiedlichen, an diametral gegenüberliegenden Seiten des Anlagenteils (1) montierbaren Messköpfen (5, 6), die Fenster (10, 11) umfassen und die Umgebungsluft enthalten,
  - mit einer wellenlängendurchstimmbaren Laserdiode (7) und einem Detektor (8), welche in den Messköpfen (5, 6) von dem Innern des Anlagenteils (1) durch die Fenster (10, 11) getrennt angeordnet sind, so dass das Licht (9) der Laserdiode (7) nach Durchstrahlen des Anlagenteils (1) auf den Detektor (8) fällt,
  - mit einer Steuereinrichtung (12, 13, 15, 17), die dazu ausgebildet ist, die Laserdiode (7) mit einer periodischen Strom-Zeit-Funktion (i(t)) anzusteuern, so dass bei der Detektion des Lichts (9) ein zeitaufgelöstes Absorptionsspektrum (18) des Prozessgasgemischs (2) erhalten wird, und
  - mit einer Auswerteeinrichtung (19), die dazu ausgebildet ist, anhand einer ausgewählten Absorptionslinie einer interessierenden Gaskomponente in dem detektierten Absorptionsspektrum (18, $18_{2f}$) des Prozessgasgemischs (2) die Konzentration dieser Gaskomponente in dem Prozessgasgemisch (2) zu bestimmen,

  **dadurch gekennzeichnet,**

  - **dass** in wenigstens einem der beiden Messköpfe (5, 6) ein Temperatursensor (23, 24) angeordnet ist, der dazu ausgebildet ist, die jeweils aktuelle Temperatur bei der Messung des Absorptionsspektrums zu erfassen,
  - **dass** in einem Speicher (26) der Auswerteeinrichtung (19) bei unterschiedlichen und mit dem Temperatursensor (23, 24) gemessenen Temperaturen und ohne Prozessgasgemisch (2) aufgenommene Umgebungs-Referenzspektren (27, $27_{2f}$) der in den beiden Messköpfen (5, 6) enthaltenen Umgebungsluft abgespeichert sind, und
  - **dass** die Auswerteeinrichtung (19) ferner dazu ausgebildet ist, eines der abgespeicherten Umgebungs-Referenzspektren (27, $27_{2f}$) in Abhängigkeit von der mit dem Temperatursensor (23, 24) erfassten aktuellen Temperatur auszuwählen oder aus zwei abgespeicherten Umgebungs-Referenzspektren (27, $27_{2f}$) zu berechnen, es von dem aktuell detektierten Absorptionsspektrum (18, $18_{2f}$) des Prozessgasgemischs (2) zu subtrahieren und anschließend anhand einer ausgewählten Sauerstoff-Absorptionslinie die Sauerstoffkonzentration in dem Prozessgasgemisch (2) zu bestimmen.

2.   Prozess-Gasanalysator nach Anspruch 1, **dadurch gekennzeichnet, dass** in beiden Messköpfen (5, 6) jeweils ein Temperatursensor (23, 24) angeordnet ist, dass die Umgebungs-Referenzspektren (27, $27_{2f}$) bei unterschiedlichen Kombinationen von Temperaturen in den Messköpfen (5, 6) aufgenommen und in dem Speicher (26) abgespeichert sind und dass die Auswerteeinrichtung (19) dazu ausgebildet ist, das von dem aktuell detektierten Absorptionsspektrum (18, $18_{2f}$) des Prozessgasgemischs (2) zu subtrahierende Umgebungs-Referenzspektrum (27, $27_{2f}$) in Abhängigkeit von den in beiden Messköpfen (5, 6) gemessenen aktuellen Temperaturen auszuwählen oder zu berechnen.

3.   Prozess-Gasanalysator nach Anspruch 1, **dadurch gekennzeichnet, dass** in beiden Messköpfen (5, 6) jeweils ein Temperatursensor (23, 24) angeordnet ist und dass die Auswerteeinrichtung (19) dazu ausgebildet ist, das in Abhängigkeit von der mit einem der beiden Temperatursensoren (23, 24) erfassten aktuellen Temperatur ausgewählte oder berechnete Umgebungs-Referenzspektrum (27, $27_{2f}$) mit einem empirisch ermittelten Faktor in Abhängigkeit von der Differenz der mit beiden Temperatursensoren (23, 24) erfassten aktuellen Temperaturen zu korrigieren.

4.   Prozess-Gasanalysator nach einem der vorangehenden Ansprüche, **dadurch gekennzeichnet, dass** ein den Umgebungsdruck messender Drucksensor (25) vorhanden ist, dass die Umgebungs-Referenzspektren (27, $27_{2f}$) zusätzlich bei unterschiedlichen Umgebungsdrücken aufgenommen und in dem Speicher (26) abgespeichert sind und dass die Auswerteeinrichtung (19) dazu ausgebildet ist, das von dem aktuell detektierten Absorptionsspektrum (18, $18_{2f}$) des Prozessgasgemischs (2) zu subtrahierende Umgebungs-Referenzspektrum (27, $27_{2f}$) zusätzlich in Abhängigkeit von den aktuell gemessenen Umgebungsdruck auszuwählen oder zu berechnen.

5. Prozess-Gasanalysator nach einem der vorangehenden Ansprüche, **dadurch gekennzeichnet, dass** die Steuereinrichtung (12, 13, 15, 17) zusätzlich dazu ausgebildet ist, die Strom-Zeit-Funktion (i(t)) zur Ansteuerung Laserdiode (7) mit einem sinusförmigen Signal (16) vorgegebener Frequenz (f) und Modulationsamplitude zu modulieren, und dass die Auswerteeinrichtung (19) ferner dazu ausgebildet ist, die durch die Detektion des Lichts (9) erhaltenen Umgebungs-Referenzspektren (27) und das aktuelle Absorptionsspektrum (18) des Prozessgasgemischs (2) bei der vorgegebenen Frequenz (f) oder einer ihrer höheren Harmonischen (2f) zu demodulieren, wobei die Umgebungs-Referenzspektren (27) in Form demodulierter Umgebungs-Referenzspektren ($27_{2f}$) abgespeichert werden, aus denen ein demoduliertes Umgebungs-Referenzspektrum ($27_{2f}$) ausgewählt oder berechnet und von dem aktuell detektierten demodulierten Absorptionsspektrum ($18_{2f}$) des Prozessgasgemischs (2) subtrahiert wird.

6. Prozess-Gasanalysator nach Anspruch 5, **dadurch gekennzeichnet, dass** die Auswerteeinrichtung (19) dazu ausgebildet ist, ein durch Parameter beschreibbares Profil einer idealen demodulierten Absorptionslinie an die ausgewählte Sauerstoff-Absorptionslinie in den demodulierten Umgebungs-Referenzspektren ($27_{2f}$) anzufitten und die demodulierten Umgebungs-Referenzspektren ($27_{2f}$) in Form der angefitteten Profile der idealen demodulierten Absorptionslinie abzuspeichern, aus denen ein Profil ausgewählt oder berechnet und von dem aktuell detektierten demodulierten Absorptionsspektrum ($18_{2f}$) des Prozessgasgemischs (2) subtrahiert wird.

7. Prozess-Gasanalysator nach Anspruch 6, **dadurch gekennzeichnet, dass** die das Profil der idealen demodulierten Absorptionslinie beschreibenden Parameter mindestens einen modulationsspezifischen Parameter umfassen, und dass die Auswerteeinrichtung (19) weiterhin dazu ausgebildet ist, das Profil der idealen demodulierten Absorptionslinie an eine aktuell detektierte und von der ausgewählten Sauerstoff-Absorptionslinie verschiedene Absorptionslinie anzufitten und den dabei erhaltenen Wert des mindestens einen modulationsspezifischen Parameter für den entsprechenden modulationsspezifischen Parameter des von dem aktuell detektierten demodulierten Absorptionsspektrum ($18_{2f}$) des Prozessgasgemischs (2) zu subtrahierenden Profils übernehmen.

## Claims

1. Process gas analyser for analysing a process gas mixture (2) guided in a plant component (1),

   - having two different measuring heads (5, 6) which can be assembled on diametrically opposed sides of the plant component (1), which comprise windows (10, 11) and contain the ambient air,
   - with a wavelength-tuneable laser diode (7) and a detector (8), which are arranged in the measuring heads (5, 6) separated from the interior of the plant component (1) by means of the windows (10, 11), so that after passing through the plant component (1) the light (9) of the laser diode (7) strikes the detector (8),
   - with a control device (12, 13, 15, 17), which is embodied to activate the laser diode (7) with a periodic current-time function (i(t)) so that upon detection of the light (9) a time-resolved absorption spectrum (18) of the process gas mixture (2) is obtained, and
   - with an evaluation device (19), which is embodied to determine the concentration of this gas component in the process gas mixture (2) on the basis of a selected absorption line of a gas component of interest in the detected absorption spectrum (18, $18_{2f}$) of the process gas mixture (2), **characterised in that**
   - a temperature sensor (23, 24) is arranged in at least one of the two measuring heads (5, 6), which is embodied to capture the respective current temperature when the absorption spectrum is measured,
   - ambient reference spectra (27, $27_{2f}$) of the ambient air contained in the two measuring heads (5, 6) which are recorded at different temperatures measured with the temperature sensor (23, 24) and without a process gas mixture (2) are stored in a storage device (26) of the evaluation device (19), and
   - the evaluation device (19) is also embodied to select one of the stored ambient reference spectra (27, $27_{2f}$) as a function of the current temperature captured with the temperature sensor (23, 24) or to calculate it from two stored ambient reference spectra (27, $27_{2f}$), to subtract it from the currently detected absorption spectrum (18, $18_{2f}$) of the process gas mixture (2) and finally to determine the oxygen concentration in the process gas mixture (2) on the basis of a selected oxygen absorption line.

2. Process gas analyser according to claim 1, **characterised in that** a temperature sensor (23, 24) is arranged in both measuring heads (5, 6) in each case, that the ambient reference spectra (27, $27_{2f}$) are recorded in the measuring

**EP 3 364 169 B1**

heads (5, 6) with different combinations of temperatures and are stored in the storage device (26) and that the evaluation device (19) is embodied to select or calculate the ambient reference spectrum (27, $27_{2f}$) to be subtracted from the currently detected absorption spectrum (18, $18_{2f}$) of the process gas mixture (2) as a function of the current temperatures measured in the two measuring heads (5, 6).

3. Process gas analyser according to claim 1, **characterised in that** a temperature sensor (23, 24) is arranged in both measuring heads (5, 6) in each case and the evaluation device (19) is embodied to correct the ambient reference spectrum (27, $27_{2f}$) selected or calculated as a function of the current temperature captured with one of the two temperature sensors (23, 24) with an empirically determined factor as a function of the difference of the current temperatures detected with both temperature sensors (23, 24).

4. Process gas analyser according to one of the preceding claims, **characterised in that** a pressure sensor (25) measuring the ambient pressure is present, that the ambient reference spectra (27, $27_{2f}$) are additionally recorded with different ambient pressures and stored in the storage device (26) and that the evaluation device (19) is embodied to select or calculate the ambient reference spectrum (27, $27_{2f}$) to be subtracted from the currently detected absorption spectrum (18, $18_{2f}$) of the process gas mixture (2) additionally as a function of the currently measured ambient pressure.

5. Process gas analyser according to one of the preceding claims, **characterised in that** the control facility (12, 13, 15, 17) is additionally embodied to modulate the current-time function (i(t)) for activating laser diode (7) with a sinusoidal signal (16) of a predetermined frequency (f) and modulation amplitude, and that the evaluation device (19) is also embodied to demodulate the ambient reference spectra (27) obtained by detecting the light (9) and the current absorption spectrum (18) of the process gas mixture (2) with the predetermined frequency (f) or one of its higher harmonics (2f), wherein the ambient reference spectra (27) are stored in the form of demodulated ambient reference spectra ($27_{2f}$), from which a demodulated ambient reference spectrum ($27_{2f}$) is selected or calculated and is subtracted from the currently detected demodulated absorption spectrum ($18_{2f}$) of the process gas mixture (2).

6. Process gas analyser according to claim 5, **characterised in that** the evaluation device (19) is embodied to fit a profile of an ideally demodulated absorption line, which can be described by parameters, on the selected oxygen absorption line into the demodulated ambient reference spectra ($27_{2f}$) and to store the demodulated ambient reference spectra ($27_{2f}$) in the form of the fitted profiles of the ideally demodulated absorption line, from which a profile is selected or calculated and is subtracted from the currently detected demodulated absorption spectrum ($18_{2f}$) of the process gas mixture (2).

7. Process gas analyser according to claim 6, **characterised in that** the parameters describing the profile of the ideally demodulated absorption line comprise at least one modulation-specific parameter, and that the evaluation device (19) is furthermore embodied to fit the profile of the ideally demodulated absorption line on a currently detected absorption line which differs from the selected oxygen absorption line and to assume the value, obtained in the process, of the at least one modulation-specific parameter for the corresponding modulation-specific parameter of the profile to be subtracted from the currently detected demodulated absorption spectrum ($18_{2f}$) of the process gas mixture (2).

**Revendications**

1. Analyseur de gaz de processus pour l'analyse d'un mélange (2) de gaz de processus passant dans une partie (1) d'une installation,

- comprenant deux têtes (5, 6) de mesure différentes et pouvant être montées sur des côtés opposés diamétralement de la partie (1) de l'installation,
qui comprennent des hublots (10, 11) et qui contiennent de l'air ambiant,
- comprenant une diode (7) laser accordable en longueur d'onde et un détecteur (8), qui, dans les têtes (5, 6) de mesure, sont disposés en étant séparés de l'intérieur de la partie (1) de l'installation par les hublots (10, 11), de manière à ce que la lumière (9) de la diode (7) laser arrive sur le détecteur (8) après avoir traversé la partie (1) de l'installation,
- comprenant un dispositif (12, 13, 15, 17) de commande, constitué pour commander la diode (7) laser, suivant une fonction (i(t)) courant-temps périodique, de manière à obtenir, à la détection de la lumière (9), un spectre (8) d'absorption à résolution dans le temps du mélange (2) de gaz de processus et

9

- comprenant un dispositif (19) d'exploitation, constitué pour déterminer, à l'aide d'une raie d'absorption sélectionnée d'un constituant gazeux auquel on s'intéresse dans le spectre (18, $18_{2f}$) d'absorption détecté du mélange (2) de gaz de processus, la concentration de ce constituant gazeux dans le mélange (2) de gaz de processus,

**caractérisé**

- **en ce que**, dans au moins l'une des deux têtes (5, 6) de mesure, est disposée une sonde (23, 24) de température, constituée pour relever la température instantanée lors de la mesure du spectre d'absorption,
- **en ce que**, dans une mémoire (26) du dispositif (19) d'exploitation, sont mémorisés des spectres (27, $27_{2f}$) de référence d'ambiance, enregistrés à des températures différentes et mesurés par la sonde (23, 24) de température et sans mélange (2) de gaz de processus, de l'air ambiant contenu dans les deux têtes (5, 6) de mesure et
- **en ce que** le dispositif (19) d'exploitation est constitué, en outre, pour sélectionner l'un des spectres (27, $27_{2f}$) de référence d'ambiance mis en mémoire en fonction de la température instantanée relevée par la sonde de température ou pour le calculer à partir de deux spectres (27, $27_{2f}$) de référence d'ambiance mis en mémoire, le soustraire du spectre (18, $18_{2f}$) d'absorption détecté instantanément du mélange (2) de gaz de processus et déterminer ensuite, à l'aide de la raie d'absorption de l'oxygène sélectionnée, la concentration de l'oxygène dans le mélange (2) de gaz de processus.

2. Analyseur de gaz de processus suivant la revendication 1, **caractérisé en ce que**, dans les deux têtes (5, 6) de mesure, est disposée, respectivement, une sonde (23, 24) de température, **en ce que** les spectres (27, $27_{2f}$) de référence d'ambiance sont enregistrés à des combinaisons différentes de températures dans les têtes (5, 6) de mesure et mis en mémoire dans la mémoire (26) et **en ce que** le dispositif (19) d'exploitation est constitué pour sélectionner ou calculer, en fonction des températures instantanées mesurées dans les deux têtes (5, 6) de mesure, le spectre (27, $27_{2f}$) de référence d'ambiance à soustraire du spectre (18, $18_{2f}$) d'absorption détecté instantanément du mélange (2) de gaz de processus.

3. Analyseur de gaz de processus suivant la revendication 1, **caractérisé en ce que**, dans les deux têtes (5, 6) de mesure, est disposée, respectivement, une sonde (23, 24) de température, **en ce que** le dispositif (19) d'exploitation est constitué pour corriger le spectre (27, $27_{2f}$) de référence d'ambiance, sélectionné ou calculé en fonction de la température instantanée relevée par l'une des deux sondes (23, 24) de température, par un facteur déterminé empiriquement en fonction de la différence entre les température instantanées relevées par les deux sondes (23, 24) de température.

4. Analyseur de gaz de processus suivant l'une des revendications précédentes, **caractérisé en ce qu'**il y a un capteur (25) de pression mesurant la pression ambiante, **en ce que** les spectres (27, $27_{2f}$) de référence d'ambiance sont enregistrés supplémentairement à des pressions ambiantes différentes et sont mis en mémoire dans la mémoire (26) et **en ce que** le dispositif (19) d'exploitation est constitué pour sélectionner ou calculer le spectre (27, $27_{2f}$) de référence d'ambiance à soustraire du spectre (18, $18_{2f}$) d'absorption détecté instantanément du mélange (2) de gaz de processus supplémentairement en fonction de la pression ambiante mesurée instantanément.

5. Analyseur de gaz de processus suivant l'une des revendications précédentes, **caractérisé en ce que** le dispositif (12, 13, 15, 17) de commande est constitué, en outre, pour moduler la fonction (i(t)) courant-temps de commande de la diode (7) laser par un signal (16) sinusoïdal de fréquence (f) et d'amplitude de modulation données à l'avance et **en ce que** le dispositif (19) d'exploitation est constitué, en outre, pour démoduler, à la fréquence (f) donnée à l'avance ou à l'un de ses harmoniques (2f) supérieurs, les spectres (27) de référence d'ambiance obtenus par la détection de la lumière (9) et le spectre (18) d'absorption instantané du mélange (2) de gaz de processus, les spectres (27) de référence d'ambiance étant mis en mémoire sous la forme de spectres ($27_{2f}$) de référence d'ambiance démodulés, à partir desquels un spectre ($27_{2f}$) de référence d'ambiance démodulé est sélectionné ou calculé et est soustrait du spectre ($18_{2f}$) d'absorption démodulé détecté instantanément du mélange (2) de gaz de processus.

6. Analyseur de gaz de processus suivant la revendication 5, **caractérisé en ce que** le dispositif (19) d'exploitation est constitué pour adapter un profil, pouvant être décrit par un paramètre, d'une raie d'absorption démodulée idéale à la raie d'absorption de l'oxygène sélectionnée dans les spectres ($27_{2f}$) de référence d'ambiance démodulés et pour mettre en mémoire les spectres ($27_{2f}$) de référence d'ambiance démodulés sous la forme des profils adaptés de la raie d'absorption démodulée idéale, à partir desquels un profil est sélectionné ou calculé et est soustrait du spectre ($18_{2f}$) d'absorption démodulé détecté instantanément du mélange (2) de gaz de processus.

**7.** Analyseur de gaz de processus suivant la revendication 6, **caractérisé en ce que** le profil du paramètre, décrivant la raie d'absorption démodulée idéale, comprend au moins un paramètre spécifique de modulation et **en ce que** le dispositif (19) d'exploitation est constitué, en outre, pour adapter le profil de la raie d'absorption démodulée idéale à une raie d'absorption détectée instantanément et différente de la raie d'absorption de l'oxygène sélectionnée et pour prendre en charge ainsi la valeur obtenue du au moins un paramètre spécifique de modulation pour le paramètre spécifique de modulation correspondant du profil à soustraire du spectre ($18_{2f}$) d'absorption démodulé détecté instantanément du mélange (2) de gaz de processus.

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1693665 A1
- EP 3104163 A1
- US 5705816 A
- US 6483589 B1
- US 7705313 B1
- DE 102013218771 B3
- US 2007296976 A1
- WO 8702460 A1
- EP 1544604 A1

**In der Beschreibung aufgeführte Nicht-Patentliteratur**

- **P. KLUCZYNSKI et al.** Wavelength modulation absorption spectrometry - an extensive scrutiny of the generation of signals. *Spectrochimica Acta,* August 2001, vol. 56, 1277-1354